# EUROPEAN PATENT APPLICATION

(11) **EP 1 408 497 A1**
(43) Date of publication of application: **14.04.2004**
(21) Application number: 03022237.6
(22) Date of filing: 01.10.2003
(51) Int. Cl.: G11B 20/00

(54) **Method of protecting recorded multimedia content against unauthorized duplication**

(30) Priority: 09.10.2002 US 268185
(71) Applicant: General Instrument Corporation, Horsham, Pennsylvania 19044 (US)
(72) Inventor: Bjordammen, David M., Blue Bell Pennsylvania 19422 (US); Lawrence D. Vince, Landsdale, Pennsylvania 19446 (US)
(74) Representative: Beck, Jürgen, Dr. Dipl.-Phys.

(57) **Abstract**

Protection against unauthorized access to stored content on a video appliance such as a set-top box/PVR (Personal Video Recorder) is provided by encrypting stored content using an event key derived by hashing a base key unique to the set-top box/PVR with event-specific information unique to the stored content. A content handle derived from the event-specific information (and optionally identical thereto) is stored along with the encrypted stored content, identifying it. To decrypt an item of stored content, the event key is recreated by once again hashing the base key (securely stored within the set-top box) with the event-specific information associated with the item of stored content (re-derived from the content handle, as necessary). This event key, identical to the event key used to encrypt the stored content, is then used to decrypt it, making it available for playback. Unauthorized access to deleted content is prevented by erasing (e.g., overwriting) the content handle associated with the deleted content.

## Description

### Technical Field

The present invention relates to copy protection techniques and more particularly to content protection in digital set-top boxes for receiving cable/satellite video/audio transmissions.

### Background Art

Recent advances in cable and satellite distribution of subscription and "on-demand" audio, video and other content to subscribers have given rise to a growing number of digital set-top boxes (sometimes referred to as Digital Consumer Terminals or "DCTs") for decoding and delivering digitally broadcast programming. These boxes often include additional circuitry to make them compatible with older analog encoding schemes for audio/video distribution. As the market for digital multimedia content of this type grows and matures, there is a corresponding growth of demand for new, more advanced features.

Video-on-demand and audio-on-demand are examples of features made practical by broadband digital broadcasting via cable and satellite. Unlike earlier services where subscribers were granted access to scheduled encrypted broadcasts (e.g., movie channels, special events programming, etc.), these on-demand services permit a subscriber to request a desired video, audio or other program at any time. Upon receiving the request for programming (and, presumably, authorization to bill the subscriber's account), the service provider then transmits the requested program to the subscriber's set-top box for viewing/listening. The program material is typically "streamed" to the subscriber in MPEG format for immediate viewing/listening, but can also be stored or buffered in the set-top box (typically on a hard-disk drive or "HDD") for subsequent viewing/listening.

A natural extension of on-demand programming is a personal video/audio recorder (PVR) capability whereby desired programming (e.g., a "broadcast" movie, program, audio recording, etc.) can be recorded to a storage medium (e.g., HDD) and played back later.

However, the potential unauthorized copying of stored content poses a significant problem for content providers and MSO's (Multiple Service Operators). Since the programs stored on a PVR may be considered to be "valuable", it is desirable to protect the content on the disk from unauthorized access, either by the subscriber or by others who might come into possession of the set-top box.

The term "PVR" is used herein to refer broadly to the video/audio HDD record and playback feature set, and includes a "PVR application" and a "DVR" (Digital Video/Audio Recorder) subsystem.

The term "PVR application" is used herein to refer to an application program running on the set-top box that provides the subscriber with features related to video/audio HDD record and playback.

The term "DVR" is used herein to refer to the low-level digital video/audio HDD recorder and player subsystem that the PVR application operates.

The broader topic of protecting multimedia content against unauthorized access/copying is often referred to as "digital rights management" or DRM. Full implementation of a DRM scheme involves considerable complexity and expense, and is often undesirable in set-top boxes, which must be provided to subscribers at minimal cost.

Data encryption is often used as a means to protect data against unauthorized access (e.g., stored content), but there are a number of problems with such schemes as they relate to set-top boxes - mostly related to the physical security of the storage medium (e.g., HDD) and/or the security of the encryption key or keys. Among the most serious concerns for content providers with respect to simple data encryption schemes are:
- Published Key attacks,
- Simple Key Derivation attacks,
- PC-based disk analysis attacks,
- Access to deleted content, and
- Accidental playback of the wrong content.

### Published Key Attacks

In this form of attack, a person attempting to gain unauthorized access to stored content (a "hacker") discovers the encryption key for a particular set-top box, and "publishes" that key (e.g., via the Internet), where other "hackers" can retrieve that key and use it to decrypt content on any set-top box.

### Simple Key Derivation Attack

In this form of attack, the "hacker" uncovers a relatively simple method of deriving a key generated by combining information readily available to the hacker - e.g., a network address (sometimes referred to as a MAC address or unit address) of a set-top box, information stored on the HDD, the date the set-top box was installed, or anything else the hacker could readily determine. This vulnerability exists when the key used by a set-top box is unique to the set-top box, but can be derived based on information that is readily available to a "casual" hacker.

### PC Based Disk Analysis Attack

One of the most likely forms of attack is a "physical" attack, whereby the hacker removes the HDD (or other storage medium) from the set-top, places it in a PC, and uses PC-based disk utilities to scan the disk to either find or derive the key. In combination with the other methods of attack described hereinabove, even strongly encrypted material can be retrieved using this approach (due to the vulnerability of the keys).

### Access to Deleted Content

DVR storage is similar to file storage on computer systems. Typically, when program material is "deleted", it is not actually erased. Instead, directory entries and disk space allocation tables are altered to mark the space occupied by the content as unused, but the stored content remains on the storage medium and can potentially be retrieved, either deliberately or accidentally. Eventually, the deleted content will be overwritten by other content, but until it is overwritten the raw storage medium retains the deleted content. This renders deleted content unavailable by ordinary means, but does not prevent a determined hacker from recovering it. Further, there is the possibility that after a set-top box is "recycled" by a MSO (i.e., returned to the MSO by one subscriber and delivered to another subscriber), that a subsequent subscriber might gain unauthorized access to content stored by a previous subscriber, either intentionally or unintentionally.

### Accidental playback of the wrong content

From time to time, MSO's have had to respond to reports from subscribers who claim that improper program content was displayed. The most notorious of these involve subscribers who report that their set-top box displayed adult content when they thought they had tuned, for example, to the Disney® channel. Such occurrences are generally due to bugs in the set-top box firmware, but serve to highlight the problems associated with unauthorized access to stored content, even when that content is encrypted.

### GLOSSARY

- DRM: Digital Rights Management
- DVR: Digital Video Recorder
- HDD: Hard Disk Drive
- NVMEM: Non-volatile Memory
- PVR: Personal Video Recorder
- SHA: Secure Hash Algorithm
- XOR: Exclusive OR
- DES: Data Encryption Standard
- 3-DES: Triple-DES encryption

### SUMMARY OF THE INVENTION

In light of the foregoing discussion, there is a need for a simple, effective scheme for preventing unauthorized access to stored content in set-top boxes.

It is therefore an object of the present invention to provide a technique for substantially hindering the ability of a "hacker" to gain unauthorized access to stored content in set-top boxes either by analysis of the storage medium (e.g., HDD) or by derivation of encryption keys.

It is a further object of the present invention to protect stored content against unauthorized access without reducing the "robustness" or reliability of the set-top box or any PVR application running therein. By way of example, if many programs are recorded and encrypted with a given key, and if that key is lost, then the subscriber would lose the ability to view the content recorded using that lost key. It is an object of the invention to ensure that this situation is extremely unlikely (barring a catastrophic hardware failure).

It is a further object of the present invention to prevent recovery of previously deleted content.

It is a further object of the present invention to prevent a subscriber in possession of a "recycled" set-top box from accessing DVR content recorded by a previous subscriber.

It is a further object of the present invention to prevent accidental playback of the wrong DVR content.

According to the invention, a method for preventing unauthorized access to stored content on a video appliance such as a set-top box/PVR comprises storing program content on a digital storage medium of the video appliance in encrypted form. The encryption is accomplished by hashing a secure base key uniquely associated with each video appliance with event-specific information uniquely associated with the encrypted content to be stored on the digital storage medium. A content handle derived from, and preferably identical to, the event-specific information is stored along with the encrypted program content, uniquely identifying it. The process of deriving the content handle must be mathematically reversible.

According to an aspect of the invention, the base key is derived from (and optionally identical to) fixed base information stored in a secure protected location of the video appliance (e.g., set-top box/PVR). An example of suitable secure storage is programmable storage internal to a microcontroller chip, where the programmable storage is set up so that it cannot be accessed from outside of the microcontroller. Only the microcontroller can access it. This makes "hacking" of the fixed base information difficult or impossible to accomplish.

According to another aspect of the invention, decoding/decryption of encrypted, stored program content, is accomplished by recreating the event-specific information from the content handle associated therewith (a trivial process in the case that the event-specific information is the same as the content handle) and hashing it with the base key (derived from the fixed base information) to reproduce the event key that was used to encrypt the stored content. This event key is then used to decrypt the stored content, thereby making it available for playback.

According to another aspect of the invention, to delete content that is no longer desired while preventing the possibility of unauthorized access to the deleted content, it is only necessary to erase (i.e. overwrite) the content handle associated with the deleted content. By eliminating the means by which the event key is recreated, decryption of any lingering deleted content on the digital storage medium becomes, for all practical purposes, impossible.

Since each unique "event" or item of stored content has unique event-specific information, each event is encrypted by a different event key, thereby minimizing the likelihood of a firmware bug causing incorrect program material to be displayed.

According to another aspect of the invention, when a set-top box is recycled, all of the content handles are erased (e.g., overwritten with zeroes), thereby rendering all previously stored content irretrievable/undecodable.

These and other aspects and objects of the present invention will become evident in light of the ensuing detailed description thereof.

### BRIEF DESCRIPTION OF THE DRAWINGS

**Figure 1** is a block diagram of a PVR system based upon a set-top box, according to the invention;
**Figure 2** is a block diagram illustrating organization of stored content on a storage medium, according to the invention;
**Figure 3** is a data flow diagram illustrating the process of encrypting an event (program content) for storage in a set-top box/PVR, according to the invention; and
**Figures 4a** and **4b** are data flow diagrams illustrating the process of decrypting stored content in a set-top box/PVR, according to the invention.

### DETAILED DESCRIPTION OF THE INVENTION

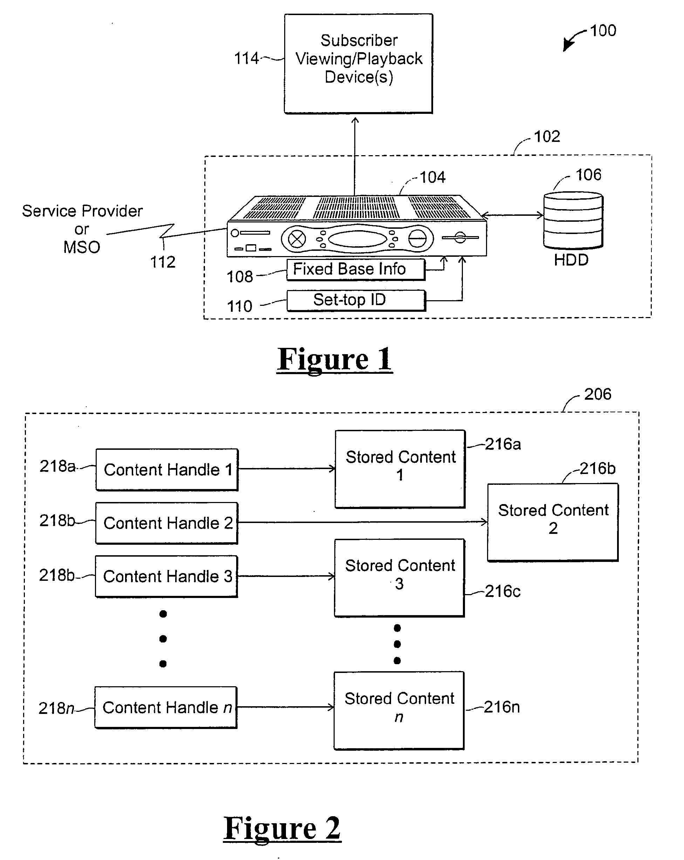

The present invention provides protection against unauthorized access to stored program content on a set-top box with PVR functionality. **Figure 1** is a block diagram of a system 100 of this type. The system comprises a set-top PVR system 102, which in turn comprises a set-top box 104 and digital storage medium 106 (e.g., a hard disk drive - "HDD"). The digital storage medium 106 may be either internal or external to the set-top box 104 and is used for storing program content.

Secure, fixed base information 108 is associated with and unique to the set-top box 104. This fixed-base information 108 is stored in a manner that makes it substantially inaccessible to "hackers" by placing it in secure, protected storage. One example of secure, protected storage is the on-chip PROM or FLASH memory of a microcontroller chip that can be programmed to make readout of data stored therein impossible except by internal access by the microcontroller itself. This type of secure storage capability exists in many modem microprocessors and microcontrollers as protection against unauthorized duplication of sensitive data or program information. Another example of secure, protected storage is PROM or FLASH memory external to a microprocessor chip but internal to the set-top box 104. Although not quite as secure as the internal protected memory of a microprocessor chip, such PROM and FLASH memory is sufficiently difficult for a subscriber or hacker to access that it provides a considerable barrier to accessing the contents thereof. The fixed base information 108 is not listed anywhere on the box and is not stored in any place that is accessible to a subscriber or hacker.

A set-top identifier 110 is also associated with and unique to the set-top box 104. The set-top identifier 110, however, is not necessarily hidden from the subscriber. It can be printed on the outside of the set-top box 104 and/or can be accessible to the MSO/service-provider by electronic query of the set-top box 104. Typically, the set-top identifier 110 will be a network address or a serial number. The set-top identifier 110 and the fixed-base information 108, while both unique to the set-top box 104, are mathematically orthogonal (independent of one another). That is, the fixed base information 108 cannot be derived from the set-top identifier 110 and vice-versa by any mathematical process or algorithm. Typically, the fixed base information 108 will be based upon an arbitrarily assigned number developed independently of the set-top identifier 110.

Typically, the fixed base information 108 is used to derive a "base key" uniquely associated with the set-top box 104. Preferably, the base key is not stored directly in the secure, permanent memory of the set-top box, but is derived (computed) by executing a secure algorithm on the fixed base information (108). Alternatively, however, the fixed base information can be used as the base key.

The set-top box 104 is connected via a communications link 112 to a service provider or MSO that provides broadcast and/or subscription program content. Typically, the communications link 112 is a cable or satellite transmission system. Link 112 could, alternatively, be any other suitable link, such as a wired and/or wireless broadband Internet, local area network (LAN), or wide area network (WAN) connection. Program content from the service provider is decoded/decrypted/converted by the set-top box for viewing and/or listening on a subscriber's viewing/playback devices 114 (e.g., television, stereo system, personal computer, handheld device, etc.).

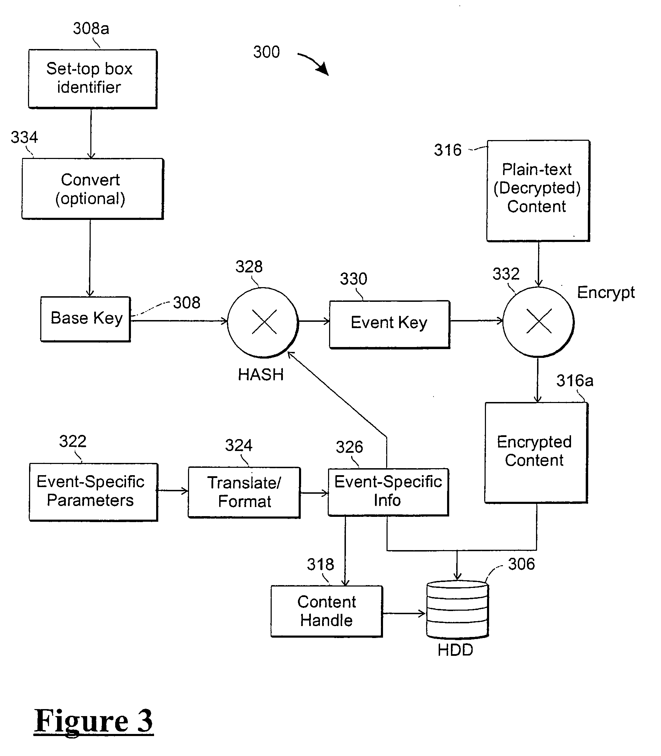

The present inventive technique employs an encryption scheme whereby stored program content is encrypted using an "event key" derived by hashing a "base key" unique to the set-top box/PVR with a "content handle" that uniquely identifies the stored program content. Each separate item of stored program content is referred to as an "event" and has its own content handle derived from information uniquely identifying the event. This is illustrated in **Figure 2**.

**Figure 2** is a block diagram showing the organization of a digital storage medium 206 (compare 106) to store a plurality of "events" (stored program content) 216a, 216b, 216c ... 216*n*. Each event 216a, 216b, 216c ... 216*n* is stored in encrypted form and has an associated content handle 218a, 218b, 218c ... 218*n* that uniquely identifies it. Preferably, the content handles 218 '*x*' are stored on the digital storage medium 206 along with the stored content (216 '*x*'). Alternatively, they can be stored elsewhere in another storage medium in the set-top box.

Figure 3 is a data flow diagram 300 illustrating the process of encrypting an event 316 (program content) for storage in a set-top box/PVR 304, according to the invention. Fixed base information 308a is either used to derive a base key 308 by means of a conversion process 334, or is itself the base key 308 if no conversion process is employed (compare 108, fixed base info). This base key 308 is maintained nowhere else. As described hereinabove with respect to Figure 1, a base key 308 cannot be mathematically derived from any information readily available to a subscriber or hacker.

When a subscriber wishes to record (store) an event, the fixed base information 308a is used to derive the base key 308 by means of the conversion process 334. (Alternatively, if no conversion process is used, the fixed base information 308a can be the same as the base key). A translation/formatting algorithm 324 processes parameters 322 associated with an "event" requested by the subscriber to produce event-specific information 326. Typically, the parameters 322 will be something unique to the event request such as the date and time of the request. Other information such as content identifying information (title, length, format, etc.) could also be used, provided that it is unique and will not be duplicated by a similar event request. The translation/formatting process 324 simply organizes and formats the parameters into a simple identifier: the event-specific information 326.

The event-specific information 326 is "hashed" with the base key 308 by a hashing algorithm 328 to produce an event key 330. The event key 330 is used as the encryption key to encrypt plain-text (unencoded/decrypted) content 316 via an encryption algorithm 332 to produce encrypted content 316a. The encryption key 330 is used only for the duration of the encryption process and is discarded upon completion thereof.

The encrypted content 316a is then stored to a storage medium 306 (compare 106) such as a hard disk drive (HDD) along with a content handle 318 (ref. 218 '*x*') used to identify it. Preferably, the content handle 318 and the event-specific information 326 are one and the same. Alternatively, however, the content handle 318 could be a mathematically reversible derivative of the event-specific information 326.

A "hashing" algorithm (e.g., 328) is a one-way mathematical process used to convert an input message to a "hash value" or "digest". Typically the hash value is shorter than the input message, but the hashing algorithm is designed to make duplication of the hash value by other input messages either impossible or extremely unlikely. The hashing process is referred to as a one-way process (or a mathematically irreversible process) because it is difficult or impossible to reproduce the inputs from the hash value, but the same inputs will always produce the same hash value. In the context of the present inventive technique, the "input message" is the combination of the event-specific information 326 and the base key 308 and the "hash value" is the event key 330.

Preferably, the hashing algorithm is a secure algorithm such as SHA-1 (a secure algorithm adopted as a federal information processing standard), but any suitable hashing algorithm will suffice provided that it is irreversible.

Preferably, the encryption algorithm 332 is a Triple-DES algorithm (a standard process for encryption by applying the DES ― Data Encryption Standard - three times in succession), but any suitable encryption algorithm could be employed.

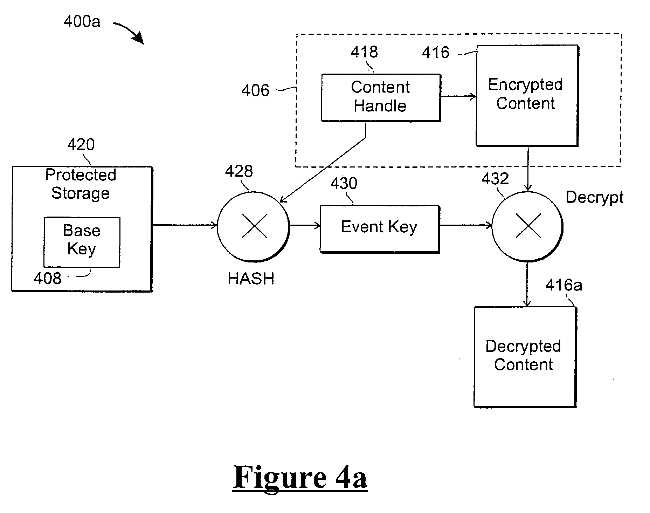

Figure 4a is a data flow diagram illustrating the process 400a of decrypting stored content 416 in a set-top box/PVR for the case where a base key 408 (compare 108, 308) is stored directly in secure, permanent, protected storage 420 of a set-top box. When a subscriber wishes to view (or listen to) specific program content 416, the content handle 418 associated with the content 416 is retrieved. If the content handle is a mathematical derivative of the event-specific information (see 326, Fig 3) used to encrypt the stored content 416, then the derivation process must be reversed to re-produce the event-specific information. For the purposes of Figure 4a, however, it is assumed that the content handle 418 and the event-specific information (326) are one and the same, in which case the content-handle 418 is hashed with the base key 408 via a hashing algorithm 428 identical to the hashing algorithm 328 used previously when the content was encrypted/stored to produce an event key 430 identical to the event key 330 used to encrypt the content, thereby producing viewable, decrypted content 416a. The event key 430 is not stored anywhere, and must be derived from the content handle 418 and base key 408 each time stored content 416 is to be decrypted and viewed. The event key 430 is used in combination with a decryption algorithm 432 to reverse the encryption process 332 performed at the time the content was stored. Without the event key 430, decryption and viewing of the stored content 416 is not possible. The event key 430 is discarded immediately after it is used and must be recreated from the base key 408 and content handle 418 every time the stored content 416 is accessed. When program content 416 is deleted, the content handle 418 is erased/cleared out (e.g., overwritten with zeroes or some other pattern unrelated to the original content handle value). This renders the content handle irretrievable. Without the content handle, the event-specific information required to regenerate the event key is irretrievable. Consequently, the event key cannot be reproduced, and the deleted content cannot be decrypted. The advantage of this scheme is that it is unnecessary to overwrite/erase massive content files (a time-consuming process) to render them unreadable. Erasure of the content handles associated with the encrypted content (416) is sufficient to provide a significant barrier to unauthorized access.

When set-top boxes are "recycled" (returned to the MSO/service provider for re-issue to another subscriber), the content keys can be wiped (erased/overwritten) quickly and easily, thereby preventing subsequent subscribers or hackers from viewing content previously recorded by another subscriber.

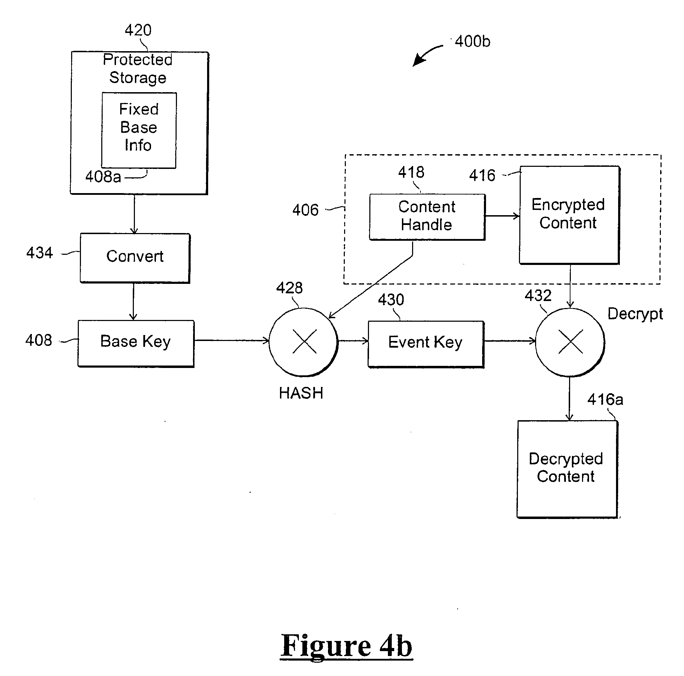

**Figure 4b** is a data flow diagram illustrating the process 400b of decrypting stored content 416 in a set-top box/PVR for the case where the base key 408 is derived from the fixed base information 408a, rather than being stored directly as described hereinabove with respect to the process 400a of Figure 4a. The process 400b is identical in all regards to the process 400a, with the exception that the fixed based information 408a is first operated upon by a conversion process 434 to derive the base key 408.
In summary, then, the base key has the following characteristics:
- Unique - the key is derived in such a way that each set-top box has a different base key.
- Secret - the key is derived in such a way that a hacker should not be able to calculate the base key for the set-top box, given information about that set-top which is generally or externally available (e.g. the network address).
- Hidden - if stored, the Base Key is stored in a place that the hacker cannot easily find: in a secure, protected storage location; not in readily accessible external memory or on the digital storage medium.
- Static ― the base key for a given unit never changes.
- Recoverable ― the base key can always be derived from the contents of secure, protected storage that never changes. (Either the base key itself or information used to derive the base key is stored in secure, protected storage).

The Base Key provides the secure foundation for PVR encryption. All event keys are derived by using the base key. Preferably, the base key is a derived value, produced by operating on fixed base information stored in a static, secure, protected storage area of the set-top box, and is unique to the set-top box. Barring a catastrophic hardware failure that destroys the secure, protected storage area, the base key will always be retrievable.

To further protect against unauthorized access and to prevent viewing of erroneous program content, each recorded event (program content) is encrypted with its own unique key. Hashing the base key with event specific information produces the "event key." Note that hashing this event specific information neither adds nor detracts from the security of the event key since the base key itself provides the security. The event key must be, to the greatest extent possible, unique for each event for the life of the product. This implies that the event specific information used to create the event key should be a value that is unique to each event.

To insure against unauthorized access to stored content, the event key (like the base key) must not be stored where it can be found by a hacker. When the stored key is deleted, the event specific information and/or content handle associated therewith is also deleted.

The present inventive technique maintains robustness of the set-top box/PVR system by ensuring that the encryption keys cannot be lost. The necessary keys can be derived at any time (barring a catastrophic hardware failure).

By securing the base key and encrypting each "event" separately by a different event key, the likelihood of accidental playback of erroneous content is greatly reduced. Further, without the base key, it becomes difficult or impossible to decrypt and playback stored or previously deleted content, even by a determined hacker.

An additional benefit to the PVR encryption/decryption is that it can be used to protect content other than video/audio content, such as private personal information (like social security numbers, credit card numbers, passwords, etc.). By using the same encryption/decryption scheme and associating a content handle with each data item to be protected, unauthorized access to subscribers' personal data can also be prevented.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the spirit and scope of the appended claims.

## Claims

1. A method for preventing unauthorized access to stored content on a video appliance, comprising:
storing fixed base information uniquely associated with the video appliance in a secure, protected storage location in the video appliance;
deriving a base key from the fixed base information; and
storing program content on the video appliance by:
providing program content to be stored on the video appliance;
deriving an event key by hashing a base key with event-specific information unique to the program content;
encrypting the program content with an encryption algorithm to produce encrypted program content, using the event key as an encryption key;
deriving a content handle from the event-specific information;
storing the encrypted program content on a digital storage medium in the video appliance; and
storing the content handle in the video appliance and associating the encrypted program content therewith.

2. A method according to claim 1, wherein:
the base key and the fixed base information are the same.

3. A method according to claim 1 or 2, wherein:
the event-specific information and the content handle are the same.

4. A method according to one of claims 1 to 3, wherein:
the base key is derived mathematically from the fixed base information.

5. A method according to one of claims 1 to 4, wherein:
the content handle is derived mathematically from the event-specific information by a reversible mathematical process.

6. A method according to one of claims 1 to 5, further comprising:
retrieving and decrypting the stored program content by:
recreating the event-specific information by reversing a mathematical process used to create the content handle;
hashing the content handle with the base key to produce an event key; and
decrypting the encrypted program content on the digital storage medium using the event key as a decryption key.

7. A method according to one of claims 1 to 6, further comprising:
deleting undesired stored content on the video appliance by erasing a content handle associated with the undesired stored content.

8. A method according to one of claims 1 to 7, wherein the video appliance is a PVR.

9. A method according to one of claims 1 to 8, wherein the content handle is stored on the digital storage medium.

10. A method for decoding encrypted content stored on a video appliance, comprising:
providing encrypted content on a storage medium associated with the video appliance, said encrypted content having been encrypted using an event key created by hashing a base key with event-specific information uniquely associated with the stored content;
providing a content handle associated with the encrypted content, said content handle being derived from the event-specific information by a reversible process;
recreating the event-specific information by reversing the reversible process;
recreating the event key by hashing the base key with the event-specific information; and
decrypting the encrypted content using the event key as a decryption key.

11. A method according to claim 10, wherein:
the base key is derived from fixed base information securely stored in the video appliance.

12. A method according to claim 10 or 11, wherein:
the base key is securely stored in the video appliance.

13. A method according to one of claims 10 to 12, wherein:
the content handle and the event-specific information are the same.

14. A method according to one of claims 10 to 13, wherein the video appliance is a PVR.

15. A method for preventing unauthorized access to stored program content on a video appliance, comprising:
providing a video appliance having:
fixed base information unique thereto stored in a secure, protected location thereof; and a digital storage medium associated therewith and accessible thereto;
providing one or more communications links for communicating between a service provider and the video appliance;
providing event-specific information uniquely associated with program content to be stored on the video appliance;
encrypting program content to produce encrypted program content, using an event key derived from the fixed base information associated with the video appliance and the event-specific information;
storing the encrypted program content on the digital storage medium associated with the video appliance along with a content handle derived from the event-specific information and associated with the encrypted program content;
recreating the event key using the fixed base information and the event-specific information; and
using the event key to decrypt the encrypted program content.

16. A method according to claim 15, wherein:
the fixed base information is used to derive a base key which in turn is used to derive the encryption key.

17. A method according to claim 15 or 16, wherein:
the event-specific information and the content handle are the same.

18. A method according to one of claims 15 to 17, further comprising:
deleting undesired encrypted content by erasing the content handle associated therewith.

19. A method according to one of claims 15 to 18 wherein said video appliance is a PVR.

20. A video appliance for storing and decoding encrypted content, comprising:
a storage medium for storing the encrypted content, said encrypted content having been encrypted using an event key created by hashing a base key with event-specific information uniquely associated with the encrypted content;
a processor for (i) recreating the event-specific information associated with the stored encrypted content and (ii) recreating the event key by hashing the base key with the recreated event-specific information; and
a decoder for decrypting the encrypted content using the event key as a decryption key.

21. A video appliance in accordance with claim 20, wherein the appliance is a PVR.

22. A video appliance in accordance with claim 20 or 21, comprising a receiver for receiving the encrypted content from a content provider.
